# EUROPÄISCHE PATENTANMELDUNG

(11) **EP 1 422 939 A2**
(43) Veröffentlichungstag der Anmeldung: **26.05.2004**
(21) Anmeldenummer: 03027088.8
(22) Anmeldetag: 25.11.2003
(51) Int. Cl.: H04N 5/74

(54) **Mehrkanaliges Projektionssystem und Verfahren zur Erzielung grosser Projektionsflächen**

(30) Priorität: 25.11.2002 DE 10255004
(71) Anmelder: Schrodt, Stefan, 42857 Remscheidt (DE)
(72) Erfinder: Schrodt, Stefan, 42857 Remscheidt (DE)
(74) Vertreter: Lippert, Stachow, Schmidt & Partner

(57) **Zusammenfassung**

Um ein kostengünstig großflächige Projektionen bereitzustellen wird ein mehrkanaliges Projektionssystem mit zumindest zwei nebeneinander oder übereinander angeordneten Projektoren (10, 20) vorgeschlagen, wobei ein einzelner Projektor jeweils einen Teil des Bildes projiziert. Das erfindungsgemäße Projektionssystem zeichnet sich dadurch aus, dass für die zumindest zwei Projektoren ein identisches, das zu projizierende Gesamtbild darstellende Eingangssignal anliegt, wobei die Pixelauflösung des darzustellenden Bildes größer als die Auflösung der Projektionspanel der zumindest zwei Projektoren ist und Mittel umfasst sind zum elektronischen Verschieben des Bildes auf den jeweiligen Panel der Projektoren, derartig, dass die durch die einzelnen Projektoren projizierten Teilbilder zusammen das zu projizierende Gesamtbild ergeben. Hierdurch wird eine pixelgetreue Darstellung des Eingangssignals erreicht, mit welchem auch das Seitenverhältnis des darzustellenden Gesamtbildes festgelegt ist.

Darüber hinaus wird ein Verfahren zur Erzielung großer Bild-Projektionsflächen vorgeschlagen.

## Beschreibung

Die Erfindung betrifft ein mehrkanaliges Projektionssystem und ein Verfahren zur Erzielung großer Projektionsflächen.

Video- und Datenprojektoren sind heute weit verbreitet. Diese umfassen beispielsweise Röhrenprojektoren, D-ILA (direct image light amplification)-Projektoren, Laserprojektoren, LCD (liquid crystal display)-Projektoren und DLP (digital light processing)- bzw. DMD (digital micro mirror devices)-Projektoren. Dabei hat es sich als günstig herausgestellt, zwei oder mehr derartiger Projektoren überieinander oder nebeneinander anzuordnen um die Größe der dargestellten Bilder zu erhöhen, die Pixelauflösung zu verbessern und/oder stereoskopische Effekte zu erzielen. Bei solchen mehrkanaligen Projektionssystemen, d.h. Systemen, bei welchen ein einzelner Projektor jeweils einen Teil des Gesamtbildes projiziert, werden üblicherweise Rechnersysteme eingesetzt, welche die jeweiligen Teilbereiche des Gesamtbildes separat berechnen einschließlich eines eventuellen Überlappungsbereiches (Edgeblending), wobei ein bestimmtes berechnetes Signal dem diesen Signal zugeordneten Projektor zugeführt wird. Die Berechnung der Teilbilder ist jedoch mit einem großen Aufwand verbunden, da hierfür parallel arbeitende Rechnersysteme eingesetzt werden müssen. Darüber hinaus ist für jedes Bildsignal eine zugeordnete Grafikkarte notwendig, über welche der jeweilige Projektor zur Abgabe des diesem zugeordneten Bildsignals verbunden ist.

Der Erfindung liegt somit die Aufgabe zugrunde, ein mehrkanaliges Projektionssystem bereitzustellen, welches kostengünstig betrieben werden kann.

Diese Aufgabe wird vorrichtungsseitig auf überraschend einfache Weise schon durch ein mehrkanaliges Projektionssystem mit den Merkmalen von Anspruch 1 gelöst. Das erfindungsgemäße Projektionssystem zeichnet sich dadurch aus, dass für die zumindest zwei Projektoren ein identisches, das zu projizierende Gesamtild darstellende Eingangssignal anliegt, wobei die Pixelauflösung des darzustellenden Bildes größer als die Auflösung der Projektionspanel der zumindest zwei Projektoren ist und Mittel umfasst sind zum elektronischen Verschieben des Bildes auf den jeweiligen Panel der Projektoren, derartig, dass die durch die einzelnen Projektoren projizierten Teilbilder zusammen das zu projizierende Gesamtbild ergeben. Hierdurch wird eine pixelgetreue Darstellung des Eingangssignals erreicht, mit welchem auch das Seitenverhältnis des darzustellenden Gesamtbildes festgelegt ist.

Der Erfindung liegt die Idee zugrunde, bei einem Projektionssystem mit mehreren nebeneinander oder übereinander angeordneten Projektoren, bei welchen ein einzelner Projektor jeweils einen Teil des Bildes projiziert, ein identisches Pixelbild-Signal für alle Projektoren vorzusehen, wobei durch ein elektronisches Verschieben des das darzustellende Bild festlegende Eingangssignal auf dem jeweiligen Projektorpanel so angeordnet ist, dass das diesem Projektor zugeordnete Teilbild dargestellt ist und alle Teilbilder zusammen das dem Eingangssignal entsprechende Gesamtbild ergeben. Insofern ist das erfindungsgemäße Projektionssystem nicht zum Skalieren des Eingangsbildes eingerichtet, sondern ein vorgegebener Projektor projiziert einen vorgegebenen Abschnitt, d.h. einen vorgegebenen Pixelbereich innerhalb des darzustellenden, d.h. zu projizierenden Gesamtbildes. Auf diese Weise kann erreicht werden, dass einfache Rechnersysteme wie ein PC oder eine Workstation mit einer herkömmlichen Grafikkarte zur Ansteuerung aller Projektoren des erfindungsgemäßen Projektionssystems verwendet werden können. Hierdurch ist eine erhebliche Kostenreduzierung beim erfindungsgemäßen Projektionssystem zur Darstellung großformatiger Projektionsflächen, z.B. im Bereich Virtual- und Augmented Reality sowie im Bereich von Simulationen verbunden. Es versteht sich, dass das erfindungsgemäße Projektionssystem sowohl für stehende Bilder, d.h. beispielsweise für Datenprojektionen, jedoch auch für fortlaufende Bilder, z.B. für Videoprojektionen einsetzbar ist. Darüber hinaus sind natürlich neben Rechnersysteme auch andere Signalquellen zur Bereitstellung des Eingangssignals einsetzbar.

Darüber hinaus kann das erfindungsgemäße Projektionssystem zur Verarbeitung von analogen Bildsignalen als auch zur Verarbeitung von digitalen Bildsignalen eingerichtet sein. Das Projektionssystem kann prinzipiell alle Projektoren, insbesondere die obenstehend angegebenen, d.h. beispielsweise Projektoren mit LCD-, DLP- oder auch D-ILA-Panel umfassen.

Vorteilhafte Weiterbildungen der Erfindung sind in den Unteransprüchen angegeben.

Um einen möglichst homogenen Bildeindruck auf der Projektionsfläche bereitzustellen kann vorgesehen sein, dass die zumindest beiden Projektoren im gleichen Abstand und mit dem gleichen Projektionswinkel zur Projektionsebene angeordnet sind, wobei darüber hinaus die Optiken der Projektoren identisch sind und im wesentlichen die gleiche Einstellung aufweisen.

Zur Erzeugung eines Bildsignals als Eingangssignal mit vorgegebener Auflösung für zumindest zwei Projektoren des erfindungsgemäßen Projektionssystems kann ein Rechnersystem bereitgestellt sein, dessen Grafikausgang mit jedem der zusammen ein Gesamtbild projizierenden Projektoren verbunden ist.

Die elektronische Verschiebung der Bilder auf den jeweiligen Projektorpanel kann dergestalt ausgeführt sein, dass sich Teilbilder von einzelnen Projektoren abschnittsweise auf der Projektionsfläche überlagern, andererseits ist es jedoch auch möglich, dass die Grenzen benachbarter Teilbilder direkt ohne Lücke aneinander liegen. In der letztgenannten Ausführung addieren sich die Pixelauflösungen der nebeneinander angeordneten Projektoren, wodurch eine besonders große Projektionsfläche bereitgestellt werden kann. Bei der abschnittsweisen Überblendung der Teilbilder kann ein kontinuierlicher Übergang von einem Teilbild zu dem anderen bereitgestellt werden, wenn das erfindungsgemäße Projektionssystem derartig ausgebildet ist, dass im Überblendungsbereich für beide Teilbilder deren Helligkeit variiert wird.

Wie obenstehend schon ausgeführt, kann das erfindungsgemäße Projektionssystem je nach Ausführungsform sowohl zur Anzeige eines analogen Eingangssignals als auch zur Anzeige eines digitalen Eingangssignals eingerichtet sein. Dabei ist dem Fachmann verständlich, dass das Bildsignal in beiden Fällen zur Anzeige auf dem jeweiligen Projektorpanel digital vorliegen muss. Wird vom Rechnersystem ein analoges Bildsignal als Eingangssignal für die Projektoren ausgegeben, kann das Mittel zum elektronischen Verschieben des Bildes auf dem Panel eines Projektors ein elektronisches Verzögerungsmittel, beispielsweise eine Kabelstrecke umfassen. Besonders einfach wird das elektronische Verschieben des Bildes auf dem Panel ermöglicht, wenn ein Synchronisationssignal, beispielsweise für die Zeilensynchronisation als Teil des Bildsignals getrennt über ein eigenes Kabel zum Projektor zugeführt wird. Mit einer zeitlichen Verschiebung des Synchronisationssignals kann die gewünschte Verschiebung des Bildes auf dem jeweiligen Projektionspanel leicht ausgeführt werden. Darüber hinaus ist es je nach Ausführungsform auch möglich, mit einer digitalen Verzögerungsschaltung das elektronische Verschieben des Bildes auf den jeweiligen Projektorpanel zu realisieren, wenn das analoge Synchronisationssignal digitalisiert wird, mittels einer digitalen Verzögerungsschaltung verzögert und nachfolgend wieder in ein analoges Synchronisationssignal umgewandelt wird. Dabei bezieht sich die Verzögerung beziehungsweise Verschiebung im Bezug auf die anderen Informationen im Bildsignal, insbesondere die hintereinander angegebenen Informationen der einzelnen Pixel, die zeilenförmig hintereinander im Bildsignal codiert sind. Wird vom Rechner selbst ein digitales Bildsignal ausgegeben, erübrigt sich die Transformation des Synchronisationssignals in den digitalen Bereich sowie die erneute Umwandlung des verzögerten Synchronisationssignals zurück in den analogen Bereich. Es versteht sich, dass durch eine entsprechende Anpassung der Vorrichtung alle Codierungsarten von Bildsignalen verarbeitet werden können.

Bei einem beispielhaften erfindungsgemäßen Projektorsystem mit zwei Projektoren werden diese mit den gleichen Bildsignalen von einem zugeordneten Rechnersystem beziehungsweise von dessen Grafikkarte versorgt. Diese Bilder werden dann wie beschrieben auf den Projektorpanel elektronisch so verschoben, dass z.B. bei einer horizontalen Nebeneinanderanordnung der Projektoren der linke Projektor eines zweikanaligen Projektionssystems nur den linken Teil des Bildes zeigt, während der rechte Projektor von dem gleichen Bild nur den rechten Teil auf die Projektorfläche projiziert, derartig, dass die beiden Teilbilder zusammen (mit oder ohne Überlappung) das gesamte Bild zeigen.

Wird darüber hinaus ein zweites derartiges Projektionssystem parallel zu dem ersten betrieben, wobei sich die beiden Gesamtbilder der Projektionssysteme pixelgenau im Gesamtbild überlagern, kann eine stereoskopische Darstellung erzeugt werden. Somit sind erfindungsgemäß auch stereoskopische Darstellungen auf sehr großen Projektionsflächen mit den obigen Vorteilen für das erfindungsgemäße Projektionssystem realisierbar. Je nach Ausführungsform können dabei die Eingangssignale für beide Projektionssysteme unterschiedlich oder identisch sein. Sind die beiden Signale unterschiedlich, umfasst ein einzelnes Eingangssignal entweder das Bild für das rechte oder das Bild für das linke Auge des Betrachters. Sind die beiden Eingangssignale für die beiden Projektionssysteme identisch, umfasst das Eingangssignal sowohl das Bild für das rechte Auge als auch das Bild für das linke Auge, beide stereoskopische Teilbilder sind demnach in einem einzelnen Eingangssignal zusammengefügt. Dieses wird dann auf jedem Projektorpanel horizontal und/oder vertikal derart verschoben, dass das dem jeweiligen Projektor zugeordnete Teilbild des stereoskopischen Gesamtbildes auf die Projektionsfläche projiziert ist, sodass sich letztlich das stereoskopische Gesamtbild ergibt. Diese Ausführungsform besitzt gegenüber der vorhergehenden den Vorteil, dass auch für eine stereoskopische Darstellung nur ein einzelner Rechner mit zugehöriger Grafikkarte benötigt wird, da dieser mit dem von ihm ausgegebenen Eingangssignal, das eine Pixeldarstellung der beiden stereoskopischen Teilbilder in einer Gesamtdarstellung ist, die gesamte benötigte Information bereitstellt. Für jedes Projektorpanel des Projektionssystems wird dann der entsprechende Bildabschnitt ausgewählt und angezeigt.

Verfahrensseitig löst die Erfindung die obige Aufgabe mit einem Verfahren zur Erzielung großer Bild-Projektionsflächen unter Verwendung eines mehrkanaligen Projektionssystems mit zumindest zwei nebeneinander oder übereinander angeordneten Projektoren, wobei ein einzelner Projektor jeweils einen Teil des Bildes projiziert. Das Verfahren zeichnet sich dadurch aus, dass zumindest zwei Projektoren im gleichen Abstand und im gleichen Projektionswinkel zur Projektionsebene angeordnet werden und die identischen Optiken der Projektoren gleich eingestellt werden, wobei für die Projektion der Teilbilder der zumindest zwei Projektoren ein im wesentlichen identisches Eingangssignal verwendet wird und die Auflösung der darzustellenden Bilder größer ist als die mögliche maximale Auflösung der Projektorpanel, wobei das Bild elektronisch auf dem jeweiligen Panel verschoben wird, derartig, dass durch die zumindest zwei Projektoren Teilbilder projiziert werden, welche zusammen auf der Projektionsfläche das dem Eingangssignal entsprechende pixelgetreue Gesamtbild ergeben.

Durch dieses Verfahren können sehr kostengünstig mehrkanalige Projektionssysteme erstellt werden. Mit nahezu jedem Rechnersystem, z.B. einem herkömmlichen PC kann erfindungsgemäß eine große Projektion mit 1:1-Darstellungen, z.B. formatgetreue Darstellungen von Kraftfahrzeugen realisiert werden, die somit vom Anwender in realer Größe betrachtet werden können.

Zweckmäßig kann das Eingangssignal zumindest für einen der Projektoren in horizontaler Richtung (H-Shift) und/oder in vertikaler Richtung (V-Shift) verschoben werden um den einem Projektor zugeordneten Abschnitt des Pixelbildes innerhalb des Eingangssignals durch entsprechendes Verschieben auf dem Projektorpanel auszuwählen.

Zweckmäßig kann zur Auswahl des an dem Projektor beziehungsweise dessen Projektorpanel zugeordneten Bereiches des Bildsignals ein Synchronisationssignal des Eingangssignals, insbesondere für die H- und/oder V-Synchronisation um eine vorgegebene Zeitdauer verzögert werden.

Mit dem erfindungsgemäßen Verfahren können mehrkanalige passive Projektionssysteme mit einem einzigen Rechner für das linke oder rechte Auge des Betrachters betrieben werden. Bei Verwendung eines herkömmlichen Rechners lassen sich somit hochauflösende Projektionswände mit großem Format erstellen. Darüber hinaus ist bei Verwendung eines zweiten Rechners, der zum ersten Rechnersystem synchron arbeitet, eine mehrdimensionale Ansicht von darzustellenden Objekten oder Daten kostengünstig realisierbar. Eine dreidimensionale Darstellung wird unter Verwendung von bekannten passiven (Polarisationsfiltern, Infitecfiltern) und aktiven (Shutterbrillen) Hilfsmitteln zur stereoskopischen Projektion erreicht. Damit lassen sich extrem kostengünstige Systeme zur Darstellung im Bereich Virtual-Reality und Augmented-Reality oder im Bereich von Simulationen oder dergleichen erstellen. Zweckmäßig kann bei zwei vertikal übereinander angeordneten Projektoren zur Realisierung einer sogenannten Cave-Darstellung vorgesehen sein, dass ein pixelquadratisches Bildsignal auf zumindest einem der Projektorpanel vertikal soweit verschoben wird, dass die Bild-Projektionsfläche des Projektorsystems in vertikaler und in horizontaler Richtung die gleiche Anzahl von Pixeln aufweist.

Die Vorteile des erfindungsgemäßen Projektionssystems beziehungsweise des erfindungsgemäßen Verfahrens sind im wesentlichen darin begründet, dass bei einer Monoprojektion ein einzelner Rechner zur Erzeugung des einzelnen Eingangssignals für alle Projektoren ausreicht und kostengünstige Projektoren verwendet werden können, deren Auflösung sich erfindungsgemäß addieren lässt. Darüber hinaus werden insbesondere bei einem 1:1-Verhältnis von (Entfernung des Projektors zur Projektionsfläche/Breite der Projektionsfläche) bei jedem Projektor die Raumanforderungen für die Projektion stark erniedrigt, da sich beim erfindungsgemäßen Projektionssystem dieses Projektionsverhältnis entsprechend erniedrigt. Sind beispielsweise zwei mit derartigen Verhältnis von 1:1 arbeitende Projektoren horizontal nebeneinander angeordnet zur Bereitstellung eines Gesamtbildes mit doppelter Pixelzahl im Vergleich zur maximalen horizontalen Auflösung der Projektorpanel, ergibt sich ein effektives Verhältnis Abstand/Bildbreite für das erfindungsgemäßen Projektionssystems von 1:2.

Die Erfindung wird im Folgenden durch das Beschreiben einiger Ausführungsbeispiele unter Bezugnahme auf die beiliegenden Figuren erläutert, wobei
- Fig. 1: in einer Prinzipskizze ein erfindungsgemäßes Projektionssystem in einer Aufsicht,
- Fig. 2: das in Fig. 1 dargestellte Projektionssystem in einer Vorderansicht und
- Fig. 3: ein Eingangssignal für ein besonderes stereoskopisches Projektionssystem gemäß der Erfindung in einer grafischen Darstellung zeigt.

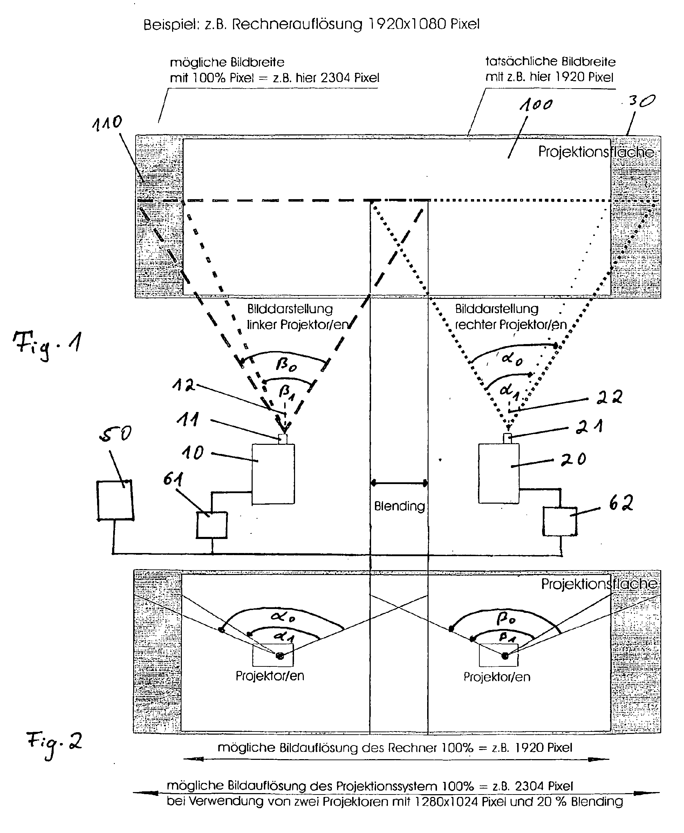

Die in Fig. 1 dargestellte Ausführungsform des erfindungsgemäßen Projektionssystems weist zwei horizontal beabstandete Projektoren 10, 20 auf. Beide umfassen jeweils eine Optik 11, 21, mit welchen das jeweilige, in der Figur nicht dargestellte Projektorpanel in die Projektionsebene 30 abgebildet wird. Die identischen Projektoren sind so angeordnet, dass diese den gleichen Abstand und den gleichen Projektionswinkel zur Projektionsebene 30 aufweisen. Beide Projektoren stehen horizontal nebeneinander mit einem relativen Abstand der beiden optischen Achsen 12, 22 zueinander. Dieser Abstand ist so eingestellt, dass sich ein Blendingbereich auf der Projektionsfläche ergibt, der sowohl von dem linken Projektor 10 als auch von dem rechten Projektor 20 abgedeckt wird.

Beide Projektoren 10, 20 sind gleich aufgebaut mit einem D-ILA-Panel, das eine Auflösung von 1.280 x 1.024 Pixel aufweist. Durch die Abbildung der jeweiligen Projektorpanel auf die Ebene 30 ergibt sich für beide Projektoren ein Projektionskegel mit einem Öffnungswinkel α₀ beziehungsweise β₀, die aufgrund der Gleichheit der Projektoren identisch sind. Dabei stimmen die angegebenen Projektionswinkel α₀ und β₀ jeweils die maximal mögliche Bildbreite, die dadurch definiert ist, dass alle in horizontaler Richtung angeordneten 1.280 Pixel der Projektorpanel bei der Darstellung verwendet werden. Vorliegend wird zur Projektion des Bildes 100 auf der Projektionsfläche 30 im linken Projektor der Projektionswinkel β₁ und im rechten Projektor der Projektionswinkel α₁ verwendet mit dem schon angegebenen und in Fig. 1 mit "Blending" bezeichneten Überlappungsbereich in horizontaler Richtung. Demgegenüber sind die beiden Projektoren zueinander vertikal ausgerichtet, sodass sich das zusammenhängende Projektionsbild 100 ergibt.

Ein Computer 50 dient zur Erzeugung eines Eingangssignals für die beiden Projektoren, wobei das Eingangssignal eine elektronische Pixeldarstellung des zu projizierenden Gesamtbildes umfasst. Vorliegend weist das vom Rechner 50 ausgegebene Bildsignal eine Auflösung von 1.920 x 1.080 Pixel auf. Demnach ist in horizontaler Richtung die Auflösung des Eingangssignals größer als die Auflösung der Projektorpanel. Um für beide Projektoren den im Eingangssignal mit der Pixelauflösung 1.920 x 1.080 en entsprechende Abschnitt für den jeweiligen Projektor auszuwählen, ist in dem jeweiligen Signalweg ein Mittel zum elektronischen Verschieben des Bildes 61, 62 auf dem Panel des jeweiligen Projektors umfasst. Da der Rechner bei der in Fig. 1 dargestellten Ausführungsform das Bildsignal unter Verwendung einer einzelnen Leitung für die horizontale Synchronisation speist, wird zur Verschiebung des Bildes auf dem jeweiligen Projektorpanel ein herkömmliches elektronisches Verzögerungsmittel im Signalweg für die horizontale Synchronisation verwendet. Durch die zeitliche Verschiebung des Synchronisationssignals ist demnach steuerbar, welcher horizontale Teilbereich des vom Rechner ausgegebenen Bildsignals von dem jeweiligen Projektor ausgegeben wird. Der Blendingbereich umfasst in dem angegebenen Beispiel 256 Pixel, d.h. 20 % des Projektionskegels α₀ bzw. β₀.

Wie aus Fig. 1 ersichtlich, startet das linke Teilbild nicht am linken Rand des Panels beziehungsweise des maximal möglichen Projektionskegels, sondern erst bei Pixel 193 der jeweiligen Zeilen. Die Verzögerungseinrichtung 61 sorgt demnach am linken Projektor 10 dafür, dass das vom Rechnersystem gelieferte Bildsignal mit einer horizontalen Auflösung von 1.920 Pixel auf dem Projektorpanel um die angegebene Anzahl von Pixel nach rechts verschoben wird. Gleichzeitig dient die Verzögerungseinrichtung 62 dazu um eine vorbestimmte Verschiebung des Synchronisationssignals innerhalb des vom Rechner bereitgestellten Eingangssignals um 832 Pixel bereitzustellen, sodass das Teilbild des vom Rechner ausgegebenen Gesamtbildes projiziert wird, welches in der Zeile ab dem Zeilenpixel 833 folgt. Auf die beschriebenen Weise wird erreicht, dass mit den beiden Projektoren 10, 20 das vom Rechner ausgegebene Bildsignal mit einer Auflösung vom 1.920 x 1.080 Pixel vollständig auf der Projektionsfläche 30 dargestellt ist, wobei sich ein Blendingbereich von 20 %, d.h. von 256 Pixel ergibt. Die Projektionsverhältnisse, insbesondere der Projektionskegel sind nochmals in Fig. 2 dargestellt.

Beim Wegfallen des Blendingbereichs kann demnach das beispielhafte erfindungsgemäße Projektionssystem eine horizontale Auflösung von 2 x 1.280 = 2.560 Pixel bereitstellen.

Das erfindungsgemäße Projektionssystem umfasst in einer nicht dargestellten Ausführungsform zwei in vertikaler Richtung übereinander angeordnete Projektoren, wobei die von den Projektoren erzeugten Teilbilder sich in vertikaler Richtung ergänzen. Auf diese Weise ist ein Projektionssystem bereitstellbar, das einer quadratischen Projektionsfläche, beispielsweise 1.280 x 1.280 Pixeln entspricht. Ein solches System ist insbesondere bei Projektionen auf dem Gebiet von Virtual-Reality nützlich.

In einer weiteren Ausführungsform der Erfindung können auch drei oder mehr Projektoren in vertikaler oder horizontaler Richtung angeordnet sein, wobei deren Teilbilder wie beschrieben erzeugt werden und diese sich zu dem durch das Bildsignal festgelegte Gesamtbild auf der Projektionsfläche zusammensetzen.

In besonderen Ausführungsformen der Erfindung sind auch stereoskopische Projektionssysteme realisierbar, bei denen sich die Gesamtbilder zweier, wie vorstehend beschrieben ausgebildeten Projektionssystemen im wesentlichen pixelgenau zu einem stereoskopischen Gesamtbild zusammensetzen. In der Regel werden beide Projektionssysteme mit unterschiedlichen Eingangssignalen gespeist. Das Licht aus beiden Projektionssystemen ist entweder im Hinblick auf die Farbe und/oder die Polarisation differenziert, sodass dies mit entsprechenden Mitteln beim Betrachter zur Erzeugung des dreidimensionalen Effektes erfasst werden kann. Die beiden unterschiedlichen Eingangssignale sind dabei jeweils durch ein getrenntes Rechnersystem ermittelt. Um eine synchrone Darstellung für das linke und rechte Auge des Betrachters bereitzustellen, sind die beiden Rechnersysteme zueinander synchronisiert.

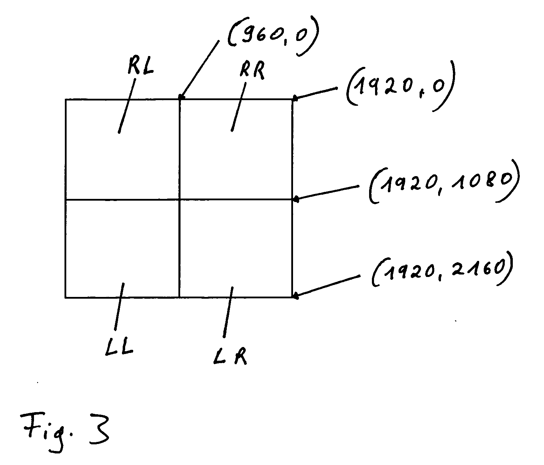

In einer weiteren Ausführungsform eines stereoskopischen Projektionssystems mit zwei wie oben beschriebenen mehrkanaligen Projektionssystemen ist jedoch vorgesehen, ein einzelnes Eingangssignal für beide mehrkanalige Projektionssysteme zu verwenden. Dies wird dadurch erreicht, dass das einzelne Eingangssignal sowohl die Pixeldarstellung für das dem rechten Auge des Betrachters zugeordnete Gesamtbild als auch die Pixeldarstellung des dem linken Auge des Betrachters zugeordnete Gesamtbild umfasst. Auf diese Weise wird erreicht, dass ein einzelnes Rechnersystem, das ein einzelnes Bildsignal ausgibt, ausreicht, um eine stereoskopische Projektionsdarstellung bereitzustellen. Ein solches beispielhaftes Bildsignal zeigt Fig. 3 in einer grafischen Darstellung. Der Einfachheit halber wird von einer Projektion ohne Blending ausgegangen. Das Eingangssignal umfasst für ein solches beispielhafte stereoskopische Projektionssystem jeweils zwei Projektoren für die Darstellung des Bildes für das rechte Auge des Betrachters und zwei Projektoren für die Darstellung des Bildes für das linke Auge des Betrachters. In Anlehnung an das in Fig. 1 dargestellte Beispiel umfasst das in Fig. 3 dargestellte Eingangsignal in der Pixeldarstellung eine Gesamtauflösung von 1.920 x 2.160 Pixel. Dieses Bild ist in vier mit den Buchstaben RL, RR, LL und LR gekennzeichneten Bildabschnitten aufgeteilt, welche den jeweiligen Bildabschnitten eines Projektors entspricht. Demnach sind RL und RR die beiden Teilbilder für das rechte Auge und LL und LR die beiden Teilbilder für das linke Auge. Das Gesamtbild von 1.920 x 2.160 Pixel wird mittels Bildverschiebung auf dem Panel des jeweiligen Projektors so eingestellt, dass der diesem Projektor zugeordnete Bildbereich (d.h. RL, RR, LL oder LR) projiziert wird. Vorliegend ergibt damit sich ein stereographisches Projektionsbild mit der Auflösung 1.920 x 1.080 Pixel. Durch eine solche erfindungsgemäße Verwendung eines einzelnen Eingabesignals, welches in einer Pixeldarstellung alle Bildinformationen für eine stereoskopische Projektion beinhaltet, kann der Hardwareaufwand stark vermindert werden, wenn Mittel vorgesehen sind, die das Eingangssignal auf jedem Projektorpanel in vorbestimmter Art und Weise horizontal und/oder vertikal verschieben, derartig, dass sich das gewünschte Gesamtbild ergibt.

## Patentansprüche

1. Mehrkanaliges Projektionssystem mit zumindest zwei nebeneinander oder übereinander angeordneten Projektoren (10, 20) zur Erzielung großer Bild-Projektionsflächen (100, 110), wobei ein einzelner Projektor jeweils einen Teil des Bildes projiziert, **dadurch gekennzeichnet, dass** für die zumindest zwei Projektoren ein identisches, das zu projizierende Bild darstellendes Eingangsignal anliegt, wobei die Auflösung des darzustellenden Bildes größer als die Auflösung der Projektionspanel der zumindest zwei Projektoren ist, und Mittel (61, 62) umfasst sind zum elektronischen Verschieben des Bildes auf dem jeweiligen Panel der Projektoren, derartig, dass die durch die einzelnen Projektoren projizierten Teilbilder zusammen das zu projizierende Gesamtbild ergeben.

2. Mehrkanaliges Projektionssystem nach Anspruch 1, **dadurch gekennzeichnet, dass** die zumindest zwei Projektoren (10, 20) im gleichen Abstand zur Projektionsebene angeordnet sind, die Projektoren im gleichen Projektionswinkel zur Projektionsebene angeordnet sind, und die Optiken der Projektoren identisch sind und im wesentlichen gleiche Einstellungen aufweisen.

3. Mehrkanaliges Projektionssystem nach Anspruch 1 oder 2, **gekennzeichnet durch** eine Signalquelle, insbesondere ein Rechnersystem (50) zur Bereitstellung eines eine Darstellung des zu projizierenden Bildes umfassenden Bildsignals als Eingangssignal mit vorgegebener Auflösung für zumindest zwei Projektoren (10, 20).

4. Mehrkanaliges Projektionssystem nach Anspruch 1, 2 oder 3, **dadurch gekennzeichnet, dass** Teilbilder von einzelnen Projektoren mit oder ohne Edgeblending teilweise übereinander oder aneinander liegend projiziert sind.

5. Mehrkanaliges Projektionssystem nach einem der Ansprüche 1 bis 4, **dadurch gekennzeichnet, dass** das Mittel zum elektronischen Verschieben des Bildes auf dem Panel eines Projektors ein elektronisches Verzögerungsmittel umfasst.

6. Stereoskopisches Projektionssystem mit zwei Projektionssystemen nach einem der Ansprüche 1 bis 5, wobei sich die beiden Gesamtbilder der beiden Projektionssystemen im wesentlichen pixelgenau zu einem stereoskopisches Gesamtbild zusammensetzen.

7. Stereoskopisches Projektionssystem nach Anspruch 6, **dadurch gekennzeichnet, dass** die beiden Projektionssysteme mit zueinander unterschiedlichen Eingangssignalen gespeist sind.

8. Stereoskopisches Projektionssystem nach Anspruch 6, **dadurch gekennzeichnet, dass** die beiden Projektionssysteme mit identischen Eingangssignalen gespeist sind, wobei beide stereoskopische Teilbilder zusammen in einem Eingangssignal umfasst sind und das Eingangssignal auf jedem Projektorpanel horizontal und/oder vertikal derartig verschoben ist, dass das dem jeweiligen Projektor zugeordnete Teilbild des stereoskopische Gesamtbildes auf die Projektionsfläche projiziert ist.

9. Verfahren zur Erzielung großer Bild-Projektionsflächen unter Verwendung eines mehrkanaligen Projektionssystems mit zumindest zwei nebeneinander oder übereinander angeordneten Projektoren, wobei ein einzelner Projektor jeweils einen Teil des Bildes projiziert, **dadurch gekennzeichnet, dass** die zumindest zwei Projektoren (10, 20) im gleichen Abstand zur Projektionsebene angeordnet werden, dass die Projektoren im gleichen Projektionswinkel zur Projektionsebene angeordnet werden, und die identischen Optiken der Projektoren gleich eingestellt werden, wobei für die Projektion der Teilbilder der zumindest zwei Projektoren ein im wesentlichen identisches Eingangssignal verwendet wird und die Auflösung der darzustellenden Bilder größer ist als die mögliche maximale Auflösung der Projektorpanel, wobei das Bild elektronisch auf dem jeweiligen Panel verschoben wird, derart, dass durch die zumindest zwei Projektoren Teilbilder projiziert werden, welche zusammen auf der Projektionsfläche das dem Eingangssignal entsprechende pixelgetreue Gesamtbild ergeben.

10. Verfahren nach Anspruch 9, **dadurch gekennzeichnet, dass** das Eingangssignal zumindest für einen der Projektoren in horizontaler Richtung (H-Shift) und/oder in vertikaler Richtung (V-Shift) verschoben wird.

11. Verfahren nach Anspruch 10, **dadurch gekennzeichnet, dass** ein Synchronisationssignal des Eingangssignals für einen Projektor um eine vorgegebene Zeitdauer verzögert wird.

12. Verfahren nach Anspruch 9, 10 oder 11, **dadurch gekennzeichnet, dass** bei zwei vertikal übereinander angeordneten Projektoren, welche jeweils ein Panel mit einem Verhältnis der Anzahl der Pixel in vertikaler Richtung zu der Anzahl der Pixel in horizontaler Richtung kleiner Eins aufweisen, ein pixelquadratisches Bildsignal auf zumindest einem der Projektorpanel vertikal soweit verschoben wird, dass die Bild-Projektionsfläche des Projektorsystems in vertikaler und in horizontaler Richtung die gleiche Anzahl von Pixeln aufweist.
